**Europäisches Patentamt**

**European Patent Office**

**Office européen des brevets**

(11) Publication number:

**0 140 706**
**B1**

## (12) EUROPEAN PATENT SPECIFICATION

(45) Date of publication of patent specification: **27.12.90**

(21) Application number: **84307476.6**

(22) Date of filing: **30.10.84**

(51) Int. Cl.⁵: **H 04 N 9/81**

(54) Jitter-immune time expansion for time-compressed line-sequential video signals.

(30) Priority: **31.10.83 JP 205631/83**

(43) Date of publication of application:
**08.05.85 Bulletin 85/19**

(45) Publication of the grant of the patent:
**27.12.90 Bulletin 90/52**

(84) Designated Contracting States:
**AT DE FR GB NL**

(56) References cited:
**DE-A-3 323 444**
**US-A-4 210 927**
**US-A-4 335 393**

(73) Proprietor: **VICTOR COMPANY OF JAPAN,**
**LIMITED**
**3-12, Moriya-cho**
**Kanagawa-ku Yokohama (JP)**

(72) Inventor: **Nishimoto, Naomichi**
**4-28-39 Saiwai-cho**
**Tachikawa-shi Tokyo (JP)**

(74) Representative: **Senior, Alan Murray et al**
**J.A. KEMP & CO 14 South Square Gray's Inn**
**London WC1R 5EU (GB)**

Courier Press, Leamington Spa, England.

## Description

The present invention relates generally to video recording and reproducing apparatus, and more specifically to a jitter-immune circuit for expanding a time-compressed, line-sequentially multiplexed video signal.

Current video recording techniques involve modulating the frequency of the luminance component of a composite color television signal, converting the frequency of the chrominance component to a lower frequency in the video spectrum and multiplexing the luminance and chrominance components in a frequency-division multiplexed format. However, the desire to achieve high quality video reproduction has brought about a time compression and expansion technique in which the luminance and color-difference components are time-compressed, line-sequentially multiplexed and modulated in frequency upon a carrier having a higher frequency than the carrier employed in the frequency-division multiplex recording. Since the luminance and color-difference signals do not coexist at the same time, the time compression technique has advantages of avoiding undesirable interference between them and avoiding undesirable Moire fringe pattern inherent in the frequency-division multiplex recording. Furthermore, the use of the higher frequency carrier eliminates the azimuth loss which is likely to cause crosstalk between adjacent tracks. A further advantage of the time compression technique is that it results in a spectral distribution of energies having a higher concentration in the lower frequency band of the spectrum and a lower energy concentration in the higher frequency band. This profile of spectral distribution lends itself to frequency modulation, resulting in a higher modulation index and a significant improvement in signal-to-noise ratio.

The time-compression technique requires read-write memories for writing and reading signals at sequentially varying rates for time compression and expansion under control of address counters. Because of the line-sequential signal format, the address counters need to be initialised at the beginning of each horizontal scan to align the timing of the write operation with the timing of the read operation.

An apparatus performing time base compression and expansion in this manner is disclosed in U.S. Patent US-A-4335393, in which the incrementation of the address counters is kept synchronised to the H-sync pulses continuously using a PLL.

However, due to mechanical tolerances inherent in recording apparatus, reproduced signals are severely affected by jitter and noise, causing the horizontal sync to deviate from the reference time and hence the occurrence of a misregistration between the recovered luminance and colour components. One approach would be to employ a time base corrector. However, the cost is prohibitive for extensive household applications.

According to a first aspect of the present invention there is provided a circuit adapted to receive and reproduce an input colour video signal comprising a time-compressed luminance signal and time-compressed colour-difference signals which are time-division multiplexed with said luminance signal and interleaved with vertical and horizontal sync pulses, comprising:

first and second memories;

first and second address counters for respectively accessing the first and second memories,

means for writing portions of a time compressed luminance signal in alternation in one of the first and second memories and for concurrently reading previously written signal portion from the other of the first and second memories, the writing and reading addresses being defined by the contents of the respective address counter,

means for incrementing the contents of each of the address counters at a first, higher, rate during writing and a second, lower, rate during reading;

means for time-expanding the multiplexed time-compressed colour-difference signals by the same proportion as that effected in respect of the read-out luminance signal; and characterised in that the circuit further comprises;

means for detecting the coincidence of said vertical and horizontal sync pulses of the input colour video signal and means for initialising said first and second address counters responsive to detection of coincidence of said vertical and horizontal sync pulses.

According to a second aspect of the present invention there is provided a recording and reproducing apparatus adapted to receive composite colour video information having a luminance signal, colour difference signals, and vertical and horizontal sync pulses, comprising:

first means for compressing said luminance signal on a time scale during a recording mode of the apparatus and expanding the time scale of the time-compressed luminance signal to the original, said first time compression and expansion means comprises first and second memories, memory access means including a pair of address counters, for respectively accessing said first and second memories for sequentially writing the luminance signal at a second rate and then reading it at a first rate, said first rate being faster than said second rate, during said recording mode and sequentially writing the time-compressed luminance signal at said first rate and then reading it at said second rate during a playback mode of said apparatus; means for incrementing the contents of each of said address counters at said first and second rates respectively; second means for compressing said colour-difference signals on a time scale during said recording mode by a factor which is complementary to the factor by which said luminance signal is compressed and expanding the time scale of the time-compressed colour-difference signals to the original, during said playback mode, and characterised by: means for initialising said first and second address counters in response to there being a simultaneous presence of said vertical and horizontal sync pulses.

According to a third aspect of the present invention there is provided a recording and reproducing apparatus adapted to receive composite colour video information having a luminance signal, colour difference signals, and vertical and horizontal sync pulses, comprising:

means for compressing said luminance signal on a time scale during a recording mode of the apparatus and expanding the time-compressed luminance signal on the original time scale during a playback mode of the apparatus and means for compressing said colour difference signals on a time scale during said recording mode and expanding said time compressed colour difference signals on the original time scale, said means including memory means and an address counter; said apparatus being characterised in that:

said address counter is operable in cyclically variable count modes for accessing said memory means first at a third rate for writing said colour-difference signals into said memory means and then at a first rate, said first rate being faster than said third rate, for reading the stored signals from the memory means during the recording mode to compress said colour difference signals and accessing the memory means first at said first rate for writing colour-difference signals into said memory means and then at said third rate for reading the stored signals during the playback mode to expand the time-compressed colour-difference signals and generating an output pulse at the end of the count modes;

phase comparator means for detecting a phase difference between said horizontal sync pulse and said output pulse; and

variable frequency oscillator means responsive to said phase difference for providing said address counter with a signal at a frequency which is a function of said phase difference and corresponds to said first rate, said address counter incrementing at said first rate during a read mode of said recording mode and during a write mode of said playback mode, and at said third rate during a write mode of said recording mode and during a read mode of said playback mode.

The present invention thus avoids the use of horizontal sync pulses that may be affected by jitter and hence improves the quality of the recorded or reproduced picture.

The present invention will be described in further detail with reference to the accompanying drawings, in which:

Figs. 1A and 1B are block diagrams of embodiments of the present invention;

Fig. 2 is a block diagram of typical circuits for frequency modulation recording and frequency demodulation reproduction employed in the invention;

Fig. 3 is a timing diagram useful for describing the time compression of luminance and colour-difference signals;

Fig. 4 is a block diagram of a memory address counter connected in the phase-locked loop of Fig. 1B; and

Fig. 5 is a timing diagram useful for understanding the operation of the counter of Fig. 4.

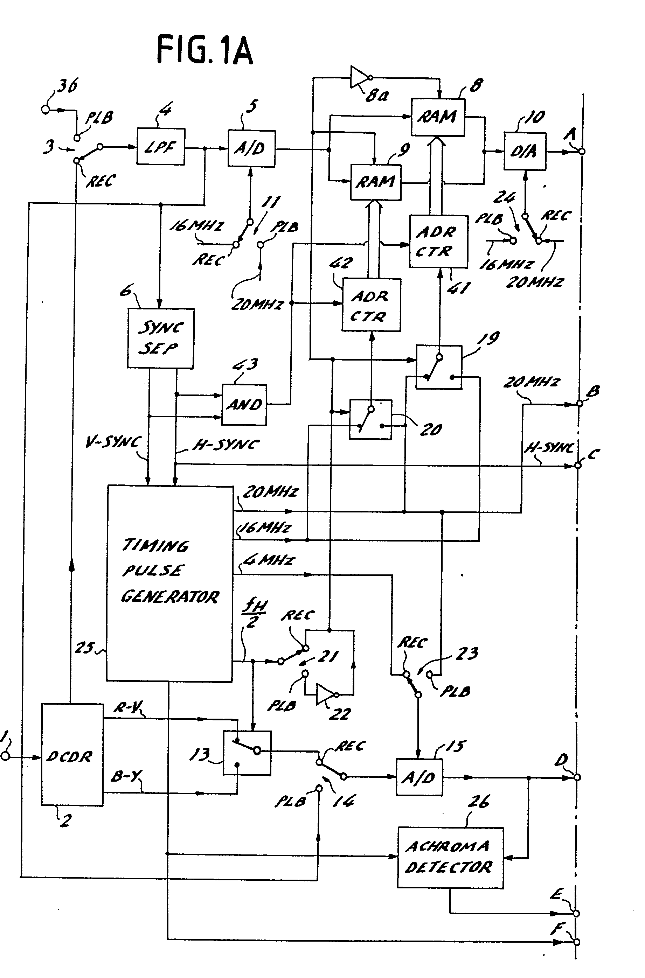

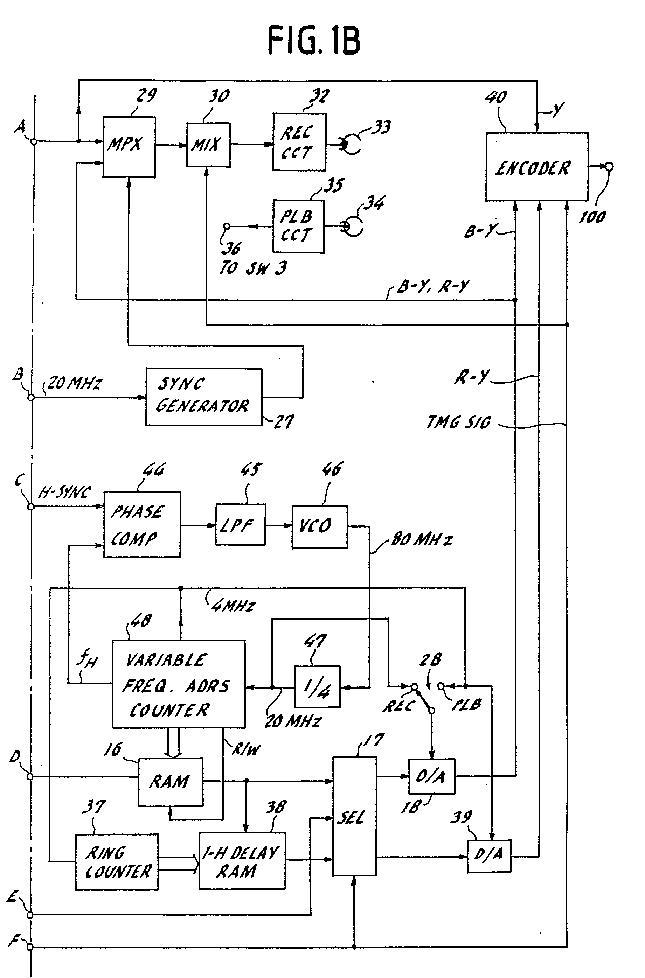

A recording/reproducing apparatus according to the present invention shown separately in Figs. 1A and 1B is adapted to receive composite color video signals through terminal 1 to a video decoder 2 where the luminance, or Y-signal component is separated for application through a record-playback mode select switch 3 and a low-pass filter 4 to an analog-digital converter 5. The color difference components R-Y and B-Y are separated from the Y-signal for application to respective contacts of an electronic analog switch 13. For purposes of explanation, it is assumed that the received video signal is of the PAL system format. Vertical and horizontal sync pulses, extracted from the Y-signal by a sync separator 6, are applied to a known timing pulse generator 25 which derives various timing control signals from the vertical and horizontal sync pulses. One typical function of this timing pulse generator is to provide clock pulse signals at frequencies 20 MHz, 16 MHz and 4 MHz. These clock signals are used as a time base to perform time compression and expansion operations which will be detailed below.

During recording mode the 16-MHz clock is applied through mode select switch 11 to the analog-digital converter 5 for sampling the Y-signal at 16-MHz rate and coding the analog video samples into 16-MHz digital video samples for coupling to read-write memories, normally random access memories 8 and 9. Address counters 41 and 42 generate address codes for accessing the memories 8 and 9 for sequentially writing and reading the Y-signal digital samples at successively varying rates to compress its time scale by a factor of 4/5 during recording mode and expand it by a factor of 5/4 to recover the original time scale during playback mode. To accomplish this time-compression and expansion the 20 and 16-MHz clock pulses are applied through switches 19 and 20 to address counters 41 and 42. Timing pulse generator 25 provides square-wave switching control pulses having a duration of 64 microseconds at one-half the horizontal line frequency, the control pulses being supplied to the control terminals of switches 19 and 20 and to the read/write enable terminals of memories 8 and 9 by way of a mode select switch 21 directly during recording mode or via an inverter 22 during playback mode. An inverter 8a is provided to reverse the polarity of the read/write control pulses applied to RAM 8 in relation to those applied to RAM 9. During recording mode switch 19 applies the 20-MHz clock to address counter 41 for a 64-microsecond horizontal line period to address the RAM 8 for writing the Y-signal, while switch 20 applies 16-MHz clock to counter 42 to address the RAM 9 for reading the stored signal. In the next line scan counters 41 and 42 are clocked at 20- and 16-MHz, respectively, in read and write operations to effect the time compression of the digital Y-signal. During playback, the switching control pulses are reversed in polarity by inverter 22 to reverse the process to effect the time expansion of the compressed Y-signal.

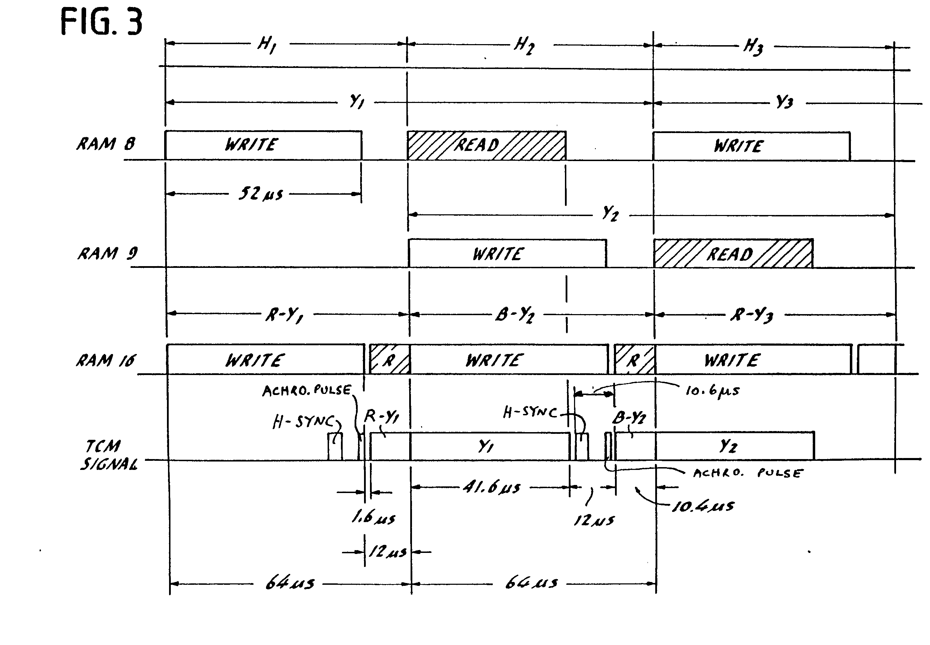

With the time compression of Y-signal the 64-microsecond interval between the original horizontal sync pulses is compressed to 51.2 microseconds. The Y-signal which has occupied the 52-microsecond period within the 64-microsecond scan interval is now compressed to 41.6 microseconds. As shown in Fig. 3, a luminance signal $Y_1$ during a horizontal line scan $H_1$ is written into memory 8 at 16 MHz and read out therefrom at 20 MHz during the next line scan $H_2$. Concurrently, luminance signal $Y_2$ is written into memory 9 at 16 MHz and read out at 20 MHz during line scan $H_3$.

The time-compressed digital Y-signal samples are fed to a digital-analog converter 10 which is driven by 20-MHz rate clock supplied via mode select switch 24 during recording. A time-compressed analog Y-signal appears at terminal A which couples the output of DA converter 10 to one input of an analog multiplexer 29.

In the illustrated embodiment, address counters 41 and 42 are initialized to a predetermined count state in response to an output signal from an AND gate 43 which generates it upon the occurrence of a coincidence between a horizontal sync pulse and a vertical sync pulse. This initialization allows the address counters 41 and 42 to become free from the jitter-affected timing of horizontal sync which would otherwise cause misregistration of memory locations between write and read operations in playback mode. Video samples stored in RAM's 8 and 9 are retrieved from right memory locations at right timing even if the reproduced signal is affected with jitter or noise which is inherent in recording/playback systems due to mechanical tolerances.

In response to the switching signal at one-half the line frequency $f_H$ the color difference signals R-Y and B-Y are alternately coupled by switch 13 to form a line-sequential signal which is applied through a mode select switch 14 to an analog-digital converter 15 where it is converted to digital samples. In recording mode AD converter 15 is driven by 4-MH clock which is coupled through a mode select switch 23, the output of AD converter 15 being fed through terminal D to a RAM 16. A variable-frequency address counter 48 generates an address code at a frequency which is variable at intervals of predetermined counts in a manner as will be detailed below for accessing the RAM 16 at a low-to-high varying rate during recording and at a high-to-low varying rate during playback. In recording mode the 4-MHz color-difference digital samples are written into memory 16 at 4 MHz rate and then read at 20 MHz to achieve the compression ratio of 1/5, so that color difference signal $R-Y_1$ is time-compressed to 10.4 microseconds and occupies an end portion of the horizontal scan $H_1$ as seen in Fig. 3. Likewise, color difference signals $B-Y_2$ and $R-Y_3$ are time-compressed during the end portions of horizontal scans $H_2$ and $H_3$.

The variable-frequency address counter 48 forms a phase-locked loop with a phase comparator 44, low-pass filter 45, voltage-controlled oscillator 46 and divide-by-4 counter 47. Phase comparator 44 provides phase comparison between horizontal sync pulses supplied through terminal C from sync separator 6 and an output signal from the address counter 48, the output of phase comparator 44 being coupled through low-pass filter 45 to VC0 46 so that the latter generates an output at a frequency 80 MHz. Counter 47 counts down the VC0 frequency to derive a 20-MHz clock for coupling to the address counter 48.

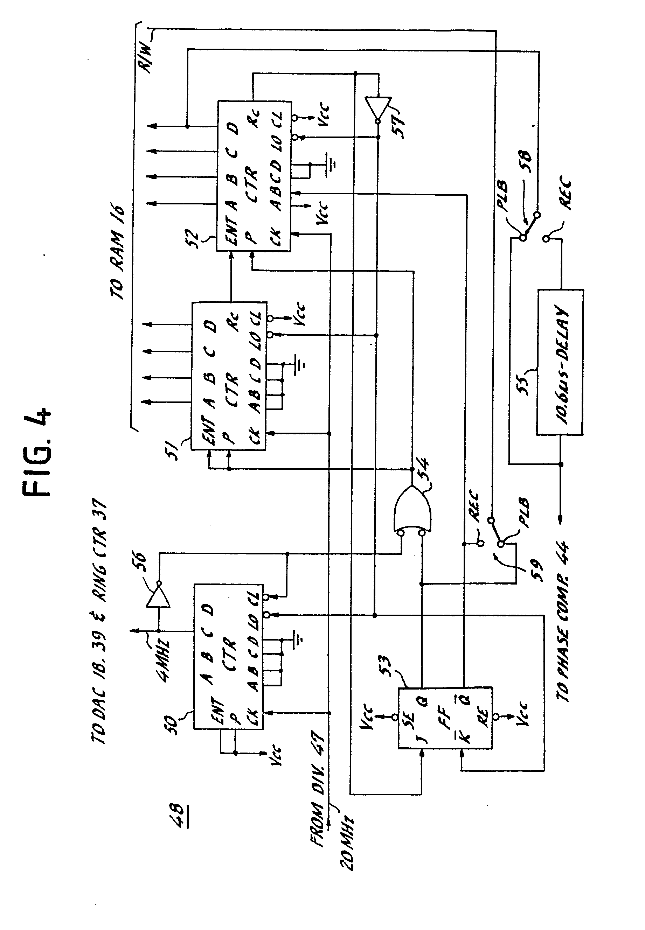

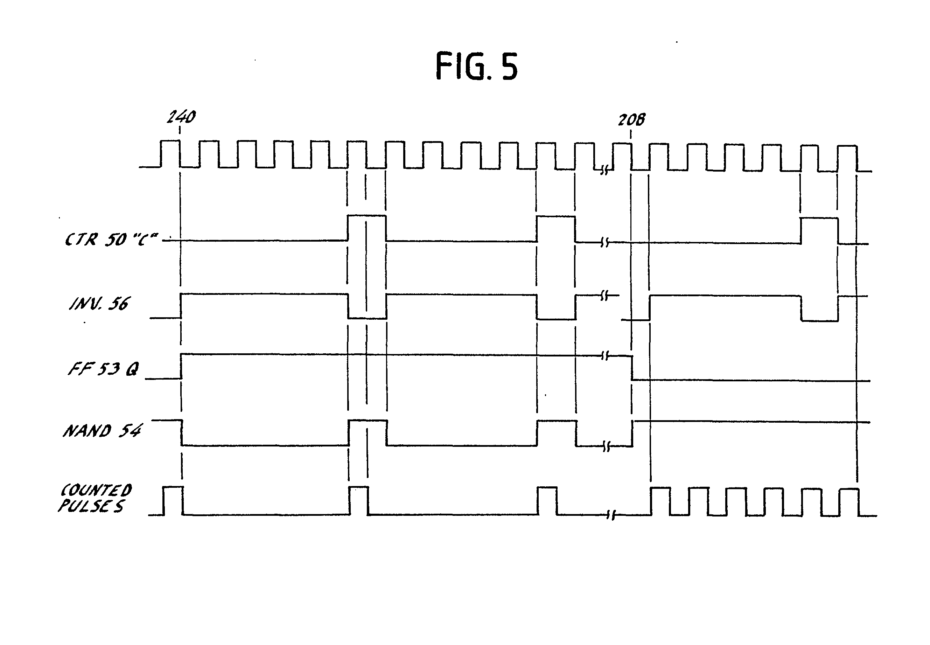

Referring to Fig. 4, the variable frequency address counter 48 comprises a divide-by-5 counter 50 and a pair of 4-bit counters 51 and 52. Counter 51 has a "ripple" carry output terminal Rc coupled to the enable terminal ENT of counter 52 to form an 8-bit counter and their 8-bit parallel conductors are coupled to RAM 16. Counter 50 has its C-output terminal coupled through an inverter 56 to the clear terminal CL thereof to clear the count state in response to receipt of every five clock pulses from divider 47 and develops a 4-MHz output pulse at the C terminal (Fig. 5). Counters 51 and 52 are programmed to recyclically generate a first carry signal at a count value of 240 which corresponds to 240 clock pulses and a second carry signal at a count value of 208 which corresponds to 1040 clock pulses. This is achieved by coupling the A-stage program input of counter 52 to voltage supply Vcc, coupling the B-stage program input to the complementary output of a J-K flip-flop 53 and grounding the C- and D-stage program inputs, while grounding all the program inputs of counter 51. The signal on the complementary output of flip-flop 53 determines whether the counters 51 and 52 are in a 240-count mode (high speed count at 20 MHz) or a 208-count mode (low speed count at 4 MHz).

A NAND gate 54 is provided having one input coupled to the output of inverter 56. A second input of this NAND gate is taken from the true output of flip-flop 53. Counters 51 and 52 operate to count every clock pulse from divide-by-4 counter 47 when the signal on the output of NAND gate 54 is high and switch to count every fifth clock pulse when the signal on the NAND gate output is low. At the count of every 240 clock pulses, counter 52 develops a carry signal which is supplied from terminal Rc to the J input of flip-flop 53, switching the true output to a high voltage level. This carry signal is also passed through inverter 57 to inverted load enable inputs of counters 50, 51 and 52 and to the inverted K input of flip-flop 53 and all the counters are reset to zero.

With the Q output of flip-flop 53 and the output of inverter 56 being high, NAND gate 54 is conditioned to generate a low-level signal which disables counters 51 and 52. Since the output of NAND gate 54 varies with the output level of inverter 56 as long as the Q output of flip-flop 53 is high, counters 51 and 52 are disabled for a period of four 20-MHz clock pulses for every five such clock pulses during 208-bit count mode. As this process continues, counter 52 generates a second carry signal at the count of 208 clock pulses which are enabled at every five 20-MHz clock pulses. This second carry signal resets the flip-flop 53 and the NAND gate 54 output now goes high to repeat the 240-clock count mode.

Since the outputs of flip-flop 53 serve to indicate the count modes of address counter 48, the true output this flip-flop is coupled through a mode select switch 59 to the read/write enable terminal of RAM 16 to drive it at 4-MHz rate in write mode when counter 48 is in the 208-clock count mode during recording and the complementary output of this flip-flop is coupled to RAM 16 to store the time-compressed color-difference signals at 20-MHz rate when counter 48 is in the 240-clock count mode during playback.

Due to the compression of the original 64-microsecond line interval to 51.2-microsecond interval, new horizontal sync pulses is inserted at a location which is displaced by a period of 10.6 microseconds with respect to the location of the original horizontal sync (Fig. 3). More specifically, the MSB pulse output of counter 52, which is generated at the end of 208 counts, is time coincident with the new horizontal sync during playback, but deviates therefrom by 10.6 microseconds during recording. To compensate for this time difference, a 10.6-microsecond delay circuit 55 is included in address counter 48. Delay circuit 55 is switched into circuit with the MSB terminal of counter 52 by a mode select switch 58 during recording and switched out of circuit during playback.

The time base of address counter 48 is thus locked in reference phase even if the horizontal sync is affected by jitter by the closed loop operation. This operation is particularly advantageous during playback since the effect of jitter is intensified by the expansion factor which would severely affect the clock timing.

Returning to Figs. 1A and 1B, the time-compressed line-sequential color-difference digital samples from RAM 16 are applied through a data selector 17 to a digital-analog converter 18. During recording this converter 18 is driven by the 20-MHz clock from the output of divide-by-4 counter 47 through a mode select switch 28 and in playback mode it is driven by the jitter-free 4-MHz clock supplied from the C-terminal of counter 50 of address counter 48. A one-line delay memory, or RAM 38 is connected to the output of RAM 16 to introduce a delay interval of one horizontal scan during playback for purposes of separating the line-sequential color-difference signals into respective components. This delay RAM is accessed at 4 MHz by a ring counter 37 which is in turn driven by the clock supplied from the address counter 48. A digital-analog converter 39, connected to an output of selector 17, also functions during playback to convert the separated color-difference digital samples to analog form by 4-MHz clock supplied from address counter 48.

During recording, the 1-line delay memory 38 remains inoperative and data selector 17 operates to pass the output of RAM 16 in sequence so that the output of DA converter 18 is a line-sequential color-difference analog signal, which is applied to a second input of the analog multiplexer 29.

During playback data selector 17 provides separation of R-Y and B-Y color-difference digital samples which are respectively converted to analog form by DA converters 18 and 39 and applied to a known encoder 40 where they are combined with the analog Y signal from DA converter 10.

To accomplish the separation of the line-sequential color-difference signals during playback, the timing pulse generator 25 derives a discrimination timing signal from vertical and sync pulses. This signal indicates the location in which an achromatic pulse is to be inserted in a 12-microsecond interval (Fig. 3) between the time-compressed Y-signal (41.6 microseconds) and the time-compressed color-difference signal (10.4 microseconds). Achromatic pulses are generated by a known achroma detector 26. The achroma detector is connected to the timing pulse generator 25 and to the output of AD converter 15 to detect digital samples which occur at locations specified by the discrimination timing pulse and takes an average value of such digital samples and generates an achromatic pulse having a width indicating the respective color-difference signal. The achromatic pulse is fed through terminal E to a third input of the data selector 17 and the discrimination timing pulse is fed through terminal F to the switching control terminal of data selector 17.

This discrimination timing pulse is applied to the encoder 40 during playback to enable it to process on the luminance and color-difference signals applied thereto by imposing frequency modulation to generate a color sub-carrier according to the PAL system format.

The analog signals applied to the multiplexer 29 are combined with vertical and horizontal sync pulses generated by a sync generator 27 which is coupled from the 20-MHz clock terminal of the timing pulse generator 25. Horizontal sync is inserted to a specified location of the 12-microsecond interval between the time-compressed Y-signal and the time-compressed color-difference signal, which is displaced by 10.6 microseconds with respect to the instant at which a readout operation of RAM 16 will begin during playback. Time-compressed, multiplexed analog signal is delivered from multiplexer 29 to a mixer 30 where it is further combined with the discrimination timing pulse supplied from timing pulse generator 25.

The output of mixer 30 is coupled to a recording circuit 32 and thence to a recording head 33 to provide a record on a magnetic medium. The recorded signal is picked up by a playback head 34 and applied to a playback circuit 35 and thence to a terminal 36 which is connected to the playback terminal of mode select switch 3.

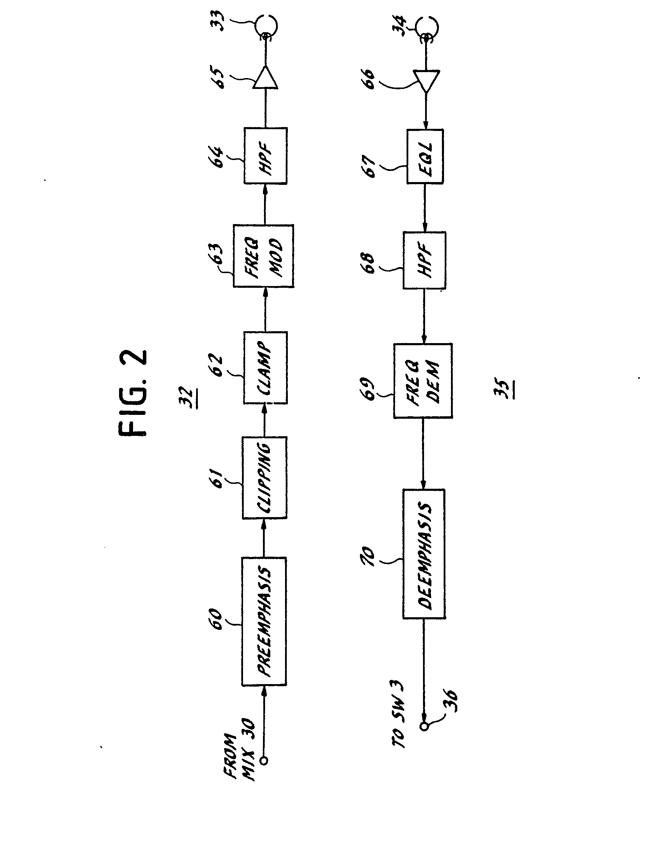

Fig. 2 illustrates a typical example of the recording and playback circuits. Recording circuit 32 comprises a preemphasis circuit 60, a clipping circuit 61, a clamp circuit 62 and a frequency modulator 63 the output of which is passed through a high-pass filter 64 and an amplifier 65 to head 33. The output of mixer 30 is applied to preemphasis circuit 60 for purposes of noise suppression. Clipping and clamping actions are performed by circuits 61 and 62 in a known manner prior to frequency modulation by circuit 63. The recorded, frequency-modulated signal is detected by head 34, amplified at 66 and equalized at 67 and passed through a high-pass filter 68 to a frequency demodulator 69 and thence to a deemphasis circuit 70, the output of which is coupled to the playback terminal of switch 3.

Recording operation will begin with all the mode select switches being positioned to the REC terminal. Time-compressed Y signals are line-sequentially interleaved with time-compressed color-difference signals and recorded on magnetic medium through the recording circuit 32.

Playback operation will begin with all the mode select switches being transferred to the PLB terminal. Frequency demodulated time-compressed, multiplexed analog signal is derived from playback circuit 35 and is passed through mode-select switch 3 and low-pass filter 4 and applied to AD converter 5 and sampled at 20-MHz and converted to 20-MHz digital samples. Time-scale expansion is performed on the Y-signal digital samples alternately by RAM's 8 and 9 in response to address codes provided by address counters 41 and 42. The counters 41 and 42 are initialized to predetermined address count in response to a horizontal sync pulse that occurs in each vertical retrace period. This initialization takes place once for each field interval. After being initialized, counters 41 and 42 are supplied continuously with clock pulses of different frequencies, first at 20 MHz and then at 16 MHz, as switched by switches 19 and 20 at one half the line frequency so that the time scale of the horizontal scan including a Y-signal and a horizontal sync pulse is expanded to the original scale. Address counters 41 and 42 are switched from a write to a read operation without interruption by switching their count states from the maximum to the predetermined initial count in response to the occurrence of a transition of clock frequency from 20 MHz to 16 MHz and vice versa. This process is repeated until the next vertical sync pulse. The time-expanded digital Y-signal is converted to analog form by DA converter 10 and fed to encoder 40.

The output of low-pass filter 4 is also routed through mode-select switch 14 to AD converter 15 which is driven at 20 MHz and applied to RAM 16 where the color-difference digital samples are separated from the Y-signal by addressing RAM 16 at the beginning of each time-compressed color-difference signal. During each expansion cycle, RAM 16 is first addressed in write mode at 20 MHz and then at 4 MHz in read mode, expanding the time-compressed B-Y and R-Y digital samples in a line sequential manner.

The horizontal sync pulse supplied to phase comparator 44 is affected by jitter as mentioned above and this effect is intensified by the expansion factor 5 to a degree which is beyond the control range of the phase-locked loop of conventional television receivers. Since the time base of RAM 16 is phase-locked with reference phase, the clock timing of RAM 16 is maintained within the control range of conventional television receivers to which the reproduced television signal is applied and is kept in a constant phase relationship with the clock timing of RAM's 8 and 9.

Ring counter 37 is driven at 4 MHz to write data sequentially read out of RAM 16 into 1-line delay RAM 38. The color-difference digital signal stored in RAM 38 is delivered at time delayed a line scan period to data selector 17. Achroma detector 26 detects an achromatic pulse from the reproduced signal and feeds the data selector 17 which also receives a distribution timing pulse from timing pulse generator 25 to differentiate between the two color-difference signals and properly distribute B-Y and R-Y digital signals to DA converters 18 and 39, respectively. Encoder 40 processes on analog color-difference signals and analog Y signal to form a composite color television signal for application to a television receiver through output terminal 100.

## Claims

1. A circuit adapted to receive and reproduce an input colour video signal comprising a time-compressed luminance signal and time-compressed colour-difference signals which are time-division multiplexed with said luminance signal and interleaved with vertical and horizontal sync pulses, comprising:

first and second memories (8 and 9);

first and second address counters (41 and 42) for respectively accessing the first and second memories;

means (8a, 21) for writing portions of a time compressed luminance signal in alternation in one of the first and second memories and for concurrently reading a previously written signal portion from the other of the first and second memories, the writing and reading addresses being defined by the contents of the respective address counter,

means (19-21) for incrementing the contents of each of the address counters at a first, higher, rate during writing and a second lower rate during reading;

means (16, 17, 44-48) for time-expanding the multiplexed time-compressed colour-difference signals by the same proportion as that effected in respect of the read-out luminance signal; and characterised in that the circuit further comprises:

means (6, 43) for detecting the coincidence of said vertical and horizontal sync pulses of the input colour video signal and means for initialising said first and second address counters responsive to detection of coincidence of said vertical and horizontal sync pulses.

2. A circuit as claimed in claim 1, wherein said expanding means comprises:

a third memory (16);

a third address counter (48) operable in cyclically variable count modes for accessing the third memory (16) first in a write mode at said first rate for writing said time-compressed colour-difference signals and then in a read mode at a third rate, said third rate being slower than said first rate, and generating an output pulse at the end of the count modes;

phase comparator means (44) for detecting a phase difference between said horizontal sync pulse and said output pulse; and

variable frequency oscillator means (46) responsive to said phase difference for providing said third address counter with a signal at a frequency which is a function of said phase difference and corresponds to said first rate, said third address counter (48) incrementing at said first rate during said write mode and at said third rate during said read mode.

3. A circuit as claimed in claim 2, further comprising digital-to-analog converter means (18, 39) for converting the output of said third memory (16) at a frequency corresponding to said third rate locked in phase by a phase-locked loop formed by said phase comparator means and said variable frequency oscillator means.

4. A recording and reproducing apparatus adapted to receive composite colour video information having a luminance signal, colour difference signals, and vertical and horizontal sync pulses, comprising:

first means (8) for compressing said luminance signal on a time scale during a recording mode of the apparatus and expanding the time scale of the time-compressed luminance signal to the original, said first time compression and expansion means comprises first and second memories (8 and 9), memory access means including a pair of address counters (41, 42), for respectively accessing said first and second memories (8 and 9) for sequentially writing the luminance signal at a second rate and then reading it at a first rate, said first rate being faster than said second rate, during said recording mode and sequentially writing the time-compressed luminance signal at said first rate and then reading it at said second rate during a playback mode of said apparatus; means for incrementing the contents of each of said address counters at said first and second rates respectively;

second means (15, 16, 26, 44-48) for compressing said colour-difference signals on a time scale during said recording mode by a factor which is complementary to the factor by which said luminance signal is compressed and expanding the time scale of the time-compressed colour-difference signals to the original, during said playback mode, and characterised by: means for initialising said first and second address counters in response to there being a simultaneous presence of said vertical and horizontal sync pulses.

5. A recording and reproducing apparatus as claimed in claim 4, wherein said second time compression and expansion means comprises:

a third memory (16);

a third address counter (48) operable in cyclically variable count modes for accessing the third memory first at said first rate in a write mode for writing said time-compressed colour-difference signals into said third memory and then at a third rate, said third rate being slower than said second rate, in a read mode for reading the stored signals from the third memory and generating an output pulse at the end of the count modes;

phase comparator means (44) for detecting a phase difference between said horizontal sync pulse and said output pulse; and

variable frequency oscillator means (46) responsive to said phase difference for providing said third address counter (48) with a signal at a frequency which is a function of said phase difference and corresponds to said first rate, said third address counter incrementing at said first rate during said write mode and at said third rate during said read mode.

6. A recording and reproducing apparatus as claimed in claim 5, further comprising digital-to-analog converter means (18, 39) for converting the output of said third memory (16) at a frequency corresponding to said third rate locked in phase by a phase-locked loop formed by said phase comparator means and said variable frequency oscillator means.

7. A recording and reproducing apparatus as claimed in claim 5, further comprising means (55) for introducing a delay to the output pulse from said third address counter (48) during said recording mode to compensate for a time difference between said horizontal sync pulse and said output pulse.

8. A recording and reproducing apparatus adapted to receive composite colour video information having a luminance signal, colour difference signals, and vertical and horizontal sync pulses, comprising:

means (8, 9) for compressing said luminance signal on a time scale during a recording mode of the apparatus and expanding the time-compressed luminance signal on the original time scale during a playback mode of the apparatus and means (16, 48) for compressing said colour difference signals on a time scale during said recording mode and expanding said time compressed colour difference signals on the original time scale, said means including memory means (16) and an address counter (48); said apparatus being characterised in that:

said address counter is operable in cyclically variable count modes for accessing said memory means first at a third rate for writing said colour-difference signals into said memory means and then at a first rate, said first rate being faster than said third rate, for reading the stored signals from the memory means during the recording mode to compress said colour difference signals and accessing the memory means first at said first rate for writing colour-difference signals into said memory means and then at said third rate for reading the stored signals during the playback mode to expand the time-compressed colour-difference signals and generating an output pulse at the end of the count modes;

phase comparator means (44) for detecting a phase difference between said horizontal sync pulse and said output pulse; and

variable frequency oscillator means (46) responsive to said phase difference for providing said address counter (48) with a signal at a frequency which is a function of said phase difference and corresponds to said first rate said address counter (48) incrementing at said first rate during a read mode of said recording mode and during a write mode of said playback mode, and at said third rate during a write mode of said recording mode and during a read mode of said playback mode.

9. A recording and reproducing apparatus as claimed in claim 8, further comprising digital-to-analog converter means (18, 39) for converting the output of said memory means (16) at a frequency corresponding to said third rate locked in phase by a phase-locked loop formed by said phase comparator means (44) and said variable frequency oscillator means (46).

10. A recording and reproducing apparatus as claimed in claim 8, further comprising means (55) for introducing a delay to the output pulse from said address counter (48) during said recording mode to compensate for difference in time between said horizontal sync pulse and said output pulse.

11. A recording and reproducing apparatus as claimed in one of claims 4 to 10, further comprising a frequency modulator for modulating the frequency of the time-compressed luminance signal and the time-compressed colour-difference signals during the recording mode and a frequency demodulator for demodulating said time-compressed signals during the playback mode.

**Patentansprüche**

1. Schaltung, die ausgelegt ist zum Empfangen und zum Wiedergeben eines anliegenden Farbvideosignals, das ein zeitkomprimiertes Luminanzsignal und zeit-komprimierte Farbdifferenzsignale umfaßt, die mit dem Luminanzsignal zeitteilungsmultiplexiert sind und verschachtelt mit Vertikal- und Horizontal-Sync-Impulsen, mit:

erstem und zweitem Speicher (8 und 9);

erstem und zweitem Adreßzähler (41 und 42) zum jeweiligen Zugriff zu dem ersten und zweiten Speicher;

Mittel (8a, 21) zum Einschreiben von Abschnitten eines zeit-komprimierten Luminanzsignals abwechselnd in einen der ersten bzw. zweiten Speicher und zum gleichzeitigen Auslesen eines vorher geschriebenen Signalabschnitts aus dem jeweils anderen der ersten oder zweiten Speicher, wobei die Schreib- und Leseadressen durch die Inhalte der jeweiligen Adreßzähler bestimmt sind,

Mittel (19-21) zum Erhöhen des Inhalts jedes Adreßzählers mit einer ersten höheren Rate während des Schreibens und einer zweiten niedrigeren Rate während des Lesens;

Mittel (16, 17, 44-48) zum Zeit-Dehnen der multiplexierten zeit-komprimierten Farbdifferenzsignale in derselben Proportion, wie sie bezüglich des ausgelesenen Luminanzsignals bewirkt wurde; und dadurch gekennzeichnet, daß die Schaltung weiter umfaßt:

Mittel (6, 43) zum Erfassen der Koinzidenz der Vertikal- und Horizontal-Sync-Impulse des anliegenden Farbvideosignals und Mittel zum Initialisieren des ersten und des zweiten Adreßzählers in Abhängigkeit von der Erfassung der Koinzidenz der Vertikal- und Horizontal-Sync-Impulse.

2. Schaltung nach Anspruch 1, bei der das Dehnungsmittel umfaßt:

einen dritten Speicher (16);

einen dritten Adreßzähler (48), der in zyklisch veränderbaren Zählmoden betreibbar ist zum Zugriff zum dritten Speicher (16) zuerst in einem Schreibmodus mit der ersten Rate zum Schreiben der zeit-komprimierten Farbdifferenzsignale und dann in einem Lesemodus mit einer dritten Rate, wobei die dritte Rate langsamer als die erste Rate ist, und zum Erzeugen eines Ausgangsimpulses am Ende der Zählmoden;

Phasenkomparatormittel (44) zum Erfassen einer Phasendifferenz zwischen dem Horizontal-Sync-Impuls und dem Ausgangsimpuls; und

Oszillatormittel (46) variabler Frequenz, um in Abhängigkeit von der Phasendifferenz den dritten Adreßzähler mit einem Signal zu versorgen mit einer Frequenz, die eine Funktion der Phasendifferenz ist und der ersten Rate entspricht, wobei der dritte Adreßzähler (48) während des Schreibmodus mit der ersten Rate und während des Lesemodus mit der dritten Rate erhöht.

3. Schaltung nach Anspruch 2, weiter mit Digital/Analog-Wandlermittel (18, 39) zum Wandeln des Ausgangssignals des dritten Speichers (16) bei einer der dritten Rate entsprechenden Frequenz, phasengerastet durch eine phasenstarre Schleife, die gebildet durch das Phasenkomparatormittel und das Oszillatormittel variabler Frequenz.

4. Aufzeichnungs- und Wiedergabevorrichtung, ausgelegt zum Empfangen zusammengesetzter Farbvideoinformation mit einem Luminanzsignal, Farbdifferenzsignalen und Vertikal- und Horizontal-Sync-Impulsen, mit:

erstem Mittel (8) zum Komprimieren des Luminanzsignals mit einem Zeitmaßstab während eines Aufzeichnungsmodus der Vorrichtung und zum Dehnen des Zeitmaßstabes des zeitkomprimierten Luminanzsignals auf das Original, wobei das erste Zeit-Komprimierungs- und Dehnungsmittel umfaßt erste und zweite Speicher (8 und 9), Speicherzugriffsmittel einschließlich ein Paar Adreßzähler (41, 42) zum jeweiligen Zugriff zu dem ersten und zweiten Speicher (8 und 9) zum sequentiellen Einschreiben des Luminanzsignals mit einer zweiten Rate und dann Auslesen desselben mit einer ersten Rate, wobei die erste Rate schneller als die zweite Rate ist, während des Aufzeichnungsmodus, und sequentiellen Einschreiben des zeit-komprimierten Luminanzsignals mit der ersten Rate und dann Auslesen desselben mit der zweiten Rate während eines Wiedergabemodus der Vorrichtung; Mittel zum Erhöhen des Inhalts jedes Adreßzählers mit der ersten bzw. zweiten Rate;

zweitem Mittel (15, 16, 26, 4-48) zum Komprimieren der Farbdifferenzsignale auf einen Zeitmaßstab während des Aufzeichnungsmodus mit einem Faktor, der zu dem Faktor komplementär ist, mit dem das Luminanzsignal komprimiert wird, und Dehnen des Zeitmaßstabes der zeitkomprimierten Farbdifferenzsignale auf das Original während des Wiedergabebetriebes

und gekennzeichnet durch: Mittel zum Initialisieren des ersten und des zweiten Adreßzählers in Abhängigkeit davon, daß gleichzeitige Anwesenheit der Vertikal und der Horizontal-Sync-Impuls vorhanden ist.

5. Aufzeichnungs- und Wiedergabevorrichtung nach Anspruch 4, bei der das zweite Zeitkomprimierungs- und -Dehnungsmittel umfaßt:

einen dritten Speicher (16);

einen dritten Adreßzähler (48), der in zyklisch variablen Zählmoden betreibbar ist zum Zugriff zu dem dritten Speicher, zuerst mit der ersten Rate in einem Schreibmodus zum Einschreiben der zeitkomprimierten Farbdifferenzsignale in den dritten Speicher, und dann mit einer dritten Rate, wobei die dritte Rate langsamer als die zweite Rate ist, in einem Lesemodus zum Auslesen der gespeicherten Signale aus dem dritten Speicher und zum Erzeugen eines Ausgangsimpulses am Ende der Zählmoden;

Phasenkomparatormittel (44) zum Erfassen einer Phasendifferenz zwischen dem Horizontal-Sync-Impuls und dem Ausgangsimpuls; und

Oszillatormittel (46) variabler Frequenz, um in Abhängigkeit von der Phasendifferenz den dritten Adreßzähler (48) mit einem Signal mit einer Frequenz zu versorgen, die eine Funktion der Phasendifferenz ist und der ersten Rate entspricht, wobei der dritte Adreßzähler während des Schreibmodus mit der ersten Rate und während des Lesemodus mit der dritten Rate erhöht.

6. Aufzeichnungs- und Wiedergabevorrichtung nach Anspruch 5, weiter mit Digital/Analog-Wandlermittel (18, 39) zum Wandeln des Ausgangssignals des dritten Speichers (16) bei einer Frequenz entsprechend der dritten Rate, phasenverriegelt durch eine phasenstarre Schleife, die gebildet ist durch das Phasenkomparatormittel und das Oszillatormittel variabler Frequenz.

7. Aufzeichnungs- und Wiedergabevorrichtung nach Anspruch 5, weiter mit Mittel (55) zum Einführen einer Verzögerung für den Ausgangsimpuls von dem dritten Adreßzähler (48) während des Aufzeichnungsmodus, um eine Zeitdifferenz zwischen dem Horizontal-Sync-Impuls und dem Ausgangsimpuls auszugleichen.

8. Aufzeichnungs- und Wiedergabevorrichtung, die ausgelegt ist zum Empfangen zusammengesetzter Farbvideoinformation mit einem Luminanzsignal, Farbdifferenzsignalen und Vertikalund Horizontal-Sync-Impulsen, mit:

Mittel (8, 9) zum Komprimieren des Luminanzsignals auf einen Zeitmaßstab während eines Aufzeichnungsmodus der Vorrichtung und zum Dehnen des zeit-komprimierten Luminanzsignals auf den originalen Zeitmaßstab während eines Wiedergabemodus der Vorrichtung und Mittel (16, 48) zum Komprimieren der Farbdifferenzsignale auf einen Zeitmaßstab während des Aufzeichnungsmodus und zum Dehnen der zeit-komprimierten Farbdifferenzsignale auf den Originalzeitmaßstab, wobei die Mittel Speichermittel (16) und einen Adreßzähler (48) enthalten;

und die Vorrichtung dadurch gekennzeichnet ist, daß:

der Adreßzähler in zyklisch variablen Zählmoden betreibbar ist zum Zugriff zu dem Speichermittel, zuerst mit einer dritten Rate zum Einschreiben der Farbdifferenzsignale in das Speichermittel und dann mit einer ersten Rate, wobei die erste Rate schneller als die dritte Rate ist, zum Auslesen der gespeicherten Signale aus dem Speichermittel während des Aufzeichnungsmodus zum Komprimieren der Farbdifferenzsignale und zum Zugriff zu dem Speichermittel zuerst mit der erten Rate zum Einschreiben von Farbdifferenzsignalen in das Speichermittel und dann mit der dritten Rate zum Auslesen der gespeicherten Signale während des Wiedergabemodus zum Dehnen der zeit-komprimierten Farbdifferenzsignale und zum Erzeugen eines Ausgangsimpulses am Ende der Zählmoden;

Phasenkomparatormittel (44) vorgesehen ist zum Erfassen einer Phasendifferenz zwischen dem Horizontal-Sync-Impuls und dem Ausgangsimpuls; und

Oszillatormittel (46) variabler Frequenz vorgesehen ist, um in Abhängigkeit von der Phasendifferenz den Adreßzähler (48) mit einem Signal mit einer Frequenz zu versorgen, die eine Funktion der Phasendifferenz ist und der ersten Rate entspricht, wobei der Adreßzähler (48) während eines Lesemodus des Aufzeichnungsmodus und während eines Schreibmodus des Wiedergabemodus mit der ersten Rate erhöht, und mit der dritten Rate während eines Schreibmodus des Aufzeichnungsmodus und während eines Lesemodus des Wiedergabemodus.

9. Aufzeichnungs- und Wiedergabevorrichtung nach Anspruch 8, weiter mit Digital/Analog-Wandlermittel (18, 39) zum Wandeln des Ausgangssignals des Speichermittels (16) mit einer Frequenz entsprechend der dritten Rate, phasenverriegelt durch eine phasenstarre Schleife, die gebildet ist durch das Phasenkomparatormittel (44) und das Oszillatormittel (46) variabler Frequenz.

10. Aufzeichnungs- und Wiedergabevorrichtung nach Anspruch 8, weiter mit Mittel (55) zum Einführen einer Verzögerung für den Ausgangsimpuls von dem Adreßzähler (48) während des Aufzeichnungsmodus zum Ausgleich für Zeitunterschiede zwischen dem Horizontal-Sync-Impuls und dem Ausgangsimpuls.

11. Aufzeichnungs- und Wiedergabevorrichtung nach einem der Ansprüche 4 bis 10, weiter mit einem Frequenzmodulator zum Modulieren der Frequenz des zeit-komprimierten Luminanzsignals und der zeit-komprimierten Farbdifferenzsignale während des Aufzeichnungsmodus und einem Frequenzdemodulator zum Demodulieren der zeit-komprimierten Signale während des Wiedergabemodus.

**Revendications**

1. Circuit prévu pour recevoir et reproduire un signal vidéo couleur d'entrée comprenant un signal de luminance comprimé en temps et des signaux de différence de couleurs comprimés en temps qui sont multiplexés par répartition dans le temps avec ce signal de luminance et entrelacés avec des impulsions de synchronisation verticale et horizontale, comprenant:

une première et une deuxième mémoires (8 et 9);

un premier et un deuxième compteurs d'adresses (41 et 42) pour accéder respectivement aux première et deuxième mémoires;

un moyen (8a, 21) pour introduire des parties d'un signal de luminance comprimé en temps en alternance dans l'une des première et deuxième mémoires et pour extraire concurremment de l'autre de ces première et deuxième mémoires une partie d'un signal précédemment introduit, les adresses d'introduction et d'extraction étant définies par le contenu du compteur d'adresses correspondant;

un moyen (19 à 21) pour faire progresser le contenu de chacun des compteurs d'adresses à un premier rythme plus rapide pendant l'introduction et à un deuxième rythme plus lent pendant l'extraction;

un moyen (16, 17, 44 à 48) pour étendre dans le temps les signaux de différence de couleur, comprimés en temps et multiplexés, dans la même proportion que pour le signal de luminance extrait de la mémoire; et caractérisé en ce que le circuit comprend en outre:

un moyen (6, 43) pour détecter la coïncidence de ces impulsions de synchronisation verticale et horizontale du signal vidéo couleur d'entrée et un moyen pour initialiser ce premier et ce deuxième compteurs d'adresses sensibles à la détection de la coïncidence des impulsions de synchronisation verticale et horizontale.

2. Circuit suivant la revendication 1, dans lequel ce moyen d'extension comprend:

une troisième mémoire (16);

un troisième compteur d'adresses (48) pouvant fonctionner dans des modes de comptage cycliquement variables afin d'accéder à la troisième mémoire (16) d'abord dans un mode d'introduction à un premier rythme afin d'introduire ces signaux de différence de couleur comprimés en temps puis dans un mode d'extraction à un troisième rythme, ce troisième rythme étant plus lent que le premier, et pour créer une impulsion de sortie à la fin des modes de comptage;

un moyen (44) formant comparateur de phase pour détecter une différence de phase entre impulsion de synchronisation horizontale et cette impulsion de sortie; et

un moyen (46) formant oscillateur à fréquence variable, sensible à cette différence de phase pour fournir au troisième compteur d'adresses un signal à une fréquence qui est fonction de cette différence de phase et qui correspond au premier rythme, ce troisième compteur d'adresses (48) progressant à ce premier rythme pendant le mode d'introduction et à ce troisième rythme pendant le mode d'extraction.

3 Circuit suivant la revendication 2, comprenant en outre un moyen (18, 39) formant convertisseur numérique-analogique pour convertir la sortie de cette troisième mémoire (16) à une fréquence correspondant à ce troisième rythme verrouillé en phase par une boucle à verrouillage de phase constituée du moyen formant comparateur de phase et du moyen formant oscillateur à fréquence variable.

4. Appareil d'enregistrement et de reproduction prévu pour recevoir une information vidéo couleur composite comprenant un signal de luminance, des signaux de différence de couleurs, et des impulsions de synchronisation verticale et horizontale, comprenant:

un premier moyen (8) pour comprimer ce signal de luminance à une échelle de temps pendant un mode d'enregistrement de l'appareil et pour étendre l'échelle de temps du signal de luminance comprimé en temps jusqu' à l'échelle originale de temps, ce premier moyen de compression et d'extension du temps comprend une première et une deuxième mémoires (8 et 9), des moyens d'accès à ces mémoires comprenant une paire de compteurs d'adresses (41, 42) afin d'accéder respectivement à cette première et à cette deuxième mémoires (8 et 9) pour introduire séquentiellement le signal de luminance à un deuxième rythme puis à l'extraire à un premier rythme, ce premier rythme étant plus rapide que le deuxième, pendant ce mode d'enregistrement et pour introduire séquentiellement le signal de luminance comprimé en temps à ce premier rythme puis à l'extraire à ce deuxième rythme pendant un mode de reproduction de cet appareil; un moyen pour faire progresser le contenu de chacun de ces compteurs d'adresses respectivement à ce premier et à ce deuxième rythmes;

un deuxième moyen (15, 16, 26, 44 à 48) pour comprimer ces signaux de différence de couleurs à une échelle de temps pendant ce mode d'enregistrement d'un facteur qui est complémentaire du facteur dont le signal de luminance est comprimé et pour étendre l'échelle de temos des signaux de différence de couleurs comprimés en temps jusqu'à l'échelle originale de temps, pendant ce mode de reproduction, et caractérisé par un moyen pour initialiser ce premier et ce deuxième compteurs d'adresses en réponse à la présence simultanée des impulsions de synchronisation verticale et horizontale.

5. Appareil d'enregistrement et de reproduction suivant la revendication 4, dans lequel ce deuxième moyen de compression et d'extension de temps comprend:

une troisième mémoire (16);

un troisième compteur d'adresses (48) pouvant fonctionner dans des modes de comptage cycliquement variables afin d'accéder à la troisième mémoire d'abord à ce premier rythme dans un mode d'introduction afin d'introduire dans cette troisième mémoire ces signaux de différence de couleurs comprimés en temps puis à un troisième rythme, ce troisième rythme étant plus lent que le deuxième, dans un mode d'extraction afin d'extraire de la troisième mémoire les signaux mémorisés et creer une impulsion de sortie à la fin des modes de comptage;

un moyen (44) formant comparateur de phase pour détecter une différence de phase entre l'impulsion de synchronisation horizontale et cette impulsion de sortie; et

un moyen (46) formant oscillateur à fréquence variable, sensible à cette différence de phase pour fournir au troisième compteur d'adresses (48) un signal à une fréquence qui est fonction de cette différence de phase et qui correspond au premier rythme, ce troisième compteur d'adresses progressant à ce premier rythme pendant le mode d'introduction et à ce troisième rythme pendant le mode d'extraction.

6. Appareil d'enregistrement et de reproduction suivant la revendication 5, comprenant en outre un moyen (18, 39) formant convertisseur numérique-analogique pour convertir la sortie de cette troisième mémoire (16) à une fréquence correspondant à ce troisième rythme verrouillé en phase par une boucle à verrouillage de phase constituée du moyen formant comparateur de phase et du moyen formant oscillateur à fréquence variable.

7. Appareil d'enregistrement et de reproduction suivant la revendication 5, comprenant en outre un moyen (55) pour appliquer un retard à l'impulsion de sortie de ce troisième compteur d'adresses (48) pendant le mode d'enregistrement afin de compenser une différence de temps entre l'impulsion de synchronisation horizontale et cette impulsion de sortie.

8. Appareil d'enregistrement et de reproduction prévu pour recevoir une information vidéo couleur composite comprenant un signal de luminance, des signaux de différence de couleurs, et des impulsions de synchronisation verticale et horizontale comprenant:

un moyen (8, 9) pour comprimer ce signal de luminance à une échelle de temps pendant un mode d'enregistrement de l'appareil et pour étendre le signal de luminance comprimé en temps à l'échelle originale de temps pendant le mode de reproduction de l'appareil et un moyen (16, 48) pour comprimer ces signaux de différence de couleurs à une échelle de temps pendant le mode d'enregistrement et étendre ces signaux de différence de couleurs comprimés en temps à l'échelle originale de temps, ce moyen comprenant une mémoire (16) et un compteur d'adresses (48); cet appareil étant caractérisé en ce que:

ce compteur d'adresses peut fonctionner dans des modes de comptage cycliquement variables afin d'accéder à cette mémoire d'abord à un troisième rythme pour introduire dans cette mémoire ces signaux de différence de couleurs puis à un premier rythme, ce premier rythme étant plus rapide que le troisième, pour extraire de la mémoire les signaux mémorisés pendant le mode d'enregistrement pour comprimer ces signaux de différence de couleurs, et afin d'accéder à la mémoire d'abord à ce premier rythme pour introduire dans cette mémoire les signaux de différence de couleur puis à ce troisième rythme pour extraire les signaux mémorisés pendant le mode de reproduction en vue d'étendre les signaux de différence de couleurs comprimés en temps et crée une impulsion de sortie à la fin des modes de comptage;

un moyen (44) formant comparateur de phase pour détecter une différence de phase entre l'impulsion de synchronisation horizontale et cette impulsion de sortie; et

un moyen (46) formant oscillateur à fréquence variable, sensible à cette différence de phase pour fournir à ce compteur d'adresses (48) un signal à une fréquence qui est fonction de cette différence de phase et qui correspond au premier rythme, ce compteur d'adresses (48) progressant à ce premier rythme pendant un mode d'extraction de ce mode d'enregistrement et pendant un mode d'introduction de ce mode de reproduction, et à ce troisième rythme pendant un mode d'introduction de ce mode d'enregistrement et pendant un mode d'extraction de ce mode de reproduction.

9. Appareil d'enregistrement et de reproduction suivant la revendication 8, comprenant en outre un moyen (18, 39) formant convertisseur numérique analogique pour convertir la sortie de cette mémoire (16) à une fréquence correspondant à ce troisième rythme verrouillé en phase par une boucle à verrouillage de phase constituée de ce moyen (44) formant comparateur de phase et de ce moyen (46) formant oscillateur à fréquence variable.

10. Appareil d'enregistrement et de reproduction suivant la revendication 8, comprenant en outre un moyen (55) pour appliquer un retard à l'impulsion de sortie de ce compteur (48) d'adresses pendant le mode d'enregistrement afin de compenser la différence de temps entre l'impulsion de synchronisation horizontale et cette impulsion de sortie.

11 Appareil d'enregistrement et de reproduction suivant l'une quelconque des revendications 4 à 10, comprenant en outre un modulateur de fréquence pour moduler la fréquence du signal de luminance comprimé en temps et des signaux de différence de couleurs comprimés en temps pendant le mode d'enregistrement et un démodulateur de fréquence pour démoduler ces signaux comprimés en temps pendant le mode de reproduction.

# FIG. 1A

# FIG. 1B

# FIG. 2

FROM MIX 30

60 PREEMPHASIS
61 CLIPPING
62 CLAMP
63 FREQ MOD
64 HPF
65
33

32

TO SW 3

36
70 DEEMPHASIS
69 FREQ DEM
68 HPF
67 EQL
66
34

35

FIG. 3

FIG. 4

# FIG. 5

240

208

CTR 50 "C"

INV. 56

FF 53 Q

NAND 54

COUNTED
PULSES

EP 0 140 706 B1